(19) Europäisches Patentamt
European Patent Office
Office européen des brevets

(11) **EP 1 215 513 A1**

(12) **EUROPEAN PATENT APPLICATION**

(43) Date of publication:
**19.06.2002 Bulletin 2002/25**

(51) Int Cl.$^7$: **G02B 1/11**, G02B 1/12

(21) Application number: **01310438.5**

(22) Date of filing: **13.12.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **14.12.2000 JP 2000380709**

(71) Applicant: **CANON KABUSHIKI KAISHA Tokyo (JP)**

(72) Inventor: **Hoshi, Hikaru Ohta-ku, Tokyo (JP)**

(74) Representative:
**Beresford, Keith Denis Lewis et al BERESFORD & Co. 2-5 Warwick Court, High Holborn London WC1R 5DH (GB)**

(54) **Element having a fine periodic structure, optical member, optical system, and optical device comprising this element**

(57) An element includes a periodic structure formed on a surface of a base member and having a period smaller than a wavelength of incident light and an additional layer added on the periodic structure. The additional layer has a refractive index lower than that of a material for the periodic structure formed on the surface of the base member.

# FIG. 1

EP 1 215 513 A1

## Description

Field of the Invention

The present invention relates to an element having a periodic structure with a period smaller than the wavelength of incident light, an optical element, optical system, and optical device using the element. Related Background Art

When light is transmitted through a boundary between air and glass having different refractive indexes, Fresnel reflection occurs. In general, when light is incident on glass, about 4% of the light is reflected by Fresnel reflection. An optical device such as a camera or liquid crystal projector uses many optical elements such as lenses and prisms. For this reason, in order to obtain desired optical performance, transmittance must be increased by reducing Fresnel reflection by some means.

As a technique generally used to reduce Fresnel reflection, a technique of obtaining an antireflection function by adding a low-refractive-index material such as $MgF_2$ or $SiO_2$ having an appropriate thickness onto the surface of an optical element is used.

In the case of a single layer antireflection film, the thickness of a single layer film can be designed by using equations given below:

$$n = (n_i \times n_s)^{1/2} \qquad (1)$$

$$nd\cos\theta = \lambda/4 \times (2m - 1) \qquad (2)$$

where $n_i$ is the refractive index of an incident-side material, $n_s$ is the refractive index of a substrate-side material, n is the refractive index of a thin film material added on the substrate, d is the film thickness, $\theta$ is the incidence angle, $\lambda$ is the design wavelength, and m is an integer.

By designing the refractive indexes of materials and optical film thickness to satisfy equations (1) and (2), the reflectance at the design wavelength $\lambda$ can be reduced to zero. In general, however, there is no combination of a substrate material and thin film material that perfectly satisfy equation (1), and hence the reflectance rarely becomes zero at the design wavelength.

When the reflectance is to be further reduced in a wide range, higher antireflection effect can be obtained by stacking a thin film.

The following problems are posed in an antireflection film using a low-refractive-index material:

(a) Low-refractive-index materials that can be used for an antireflection film are limited.
(b) Depending on the affinity between a substrate material and a low-refractive-index material, a desired antireflection film cannot be added.
(c) The antireflection film may deteriorate depending on environmental changes such as temperature and humidity changes.

Optical elements having fine periodic structures have been studied, and an antireflection function has been known as a characteristic of the optical elements having the fine periodic structures. More specifically, an antireflection function is realized by forming a fine periodic structure with a period smaller than the wavelength of incident light (e.g., about 1/2 to 1/10 the wavelength of incident light) on a substrate.

A substrate having a rectangular fine periodic structure exhibits a reduction in reflectance (scalar calculation) as compared with a substrate without any fine structure. By forming a fine periodic structure on the surface of a substrate, the same antireflection effect as that obtained by a thin film using a low-refractive-index material can be obtained. In addition, since a fine periodic structure is formed on a substrate, no limitations are imposed on low-refractive-index materials to be used, and freer design is allowed as compared with the case where a thin film is used.

According to a conventional optical element, an antireflection function is attained by appropriately controlling the thickness of a thin material having a refractive index lower than that of a substrate material and formed on the surface of the substrate. An antireflection element having a fine periodic structure with a period smaller than the wavelength of incident light exhibits an antireflection function similar to that of the conventional thin antireflection film.

In general, a protection film is preferably added on the surface of the element having the fine periodic structure in consideration of durability, i.e., protection against environmental changes such as temperature and humidity changes, protection against physical damages, and the like.

Japanese Patent Application Laid-open No. 11-48355 discloses an optical element having a protection film formed on a fine uneven pattern, its mold, and a method of manufacturing the element. The final shape of this element after the formation of the protection film becomes a target fine uneven pattern.

This is a proposal about a technique of forming a protection film shape added on a substrate, but no proposal is made about a technique of designing a specific optimal protection film thickness and the optical performance of an optical element to which a protection film is added.

Japanese Patent Application Laid-open No. 11-174216 discloses a protection film for improving diffraction efficiency in a high-frequency region and a method of manufacturing the protection film for a diffraction optical element manufactured by forming a protection film on a side surface of each diffraction element in a sawtooth shape or stepped shape and removing the protection film after the formation of an antireflection film.

However, there is no proposal about a protection film for an antireflection element having a fine periodic structure with a period smaller than the wavelength of incident light.

Japanese Patent Application Laid-open No. 11-305005 discloses an antireflection film that stably and greatly reduces normally reflected light produced at a light-transmitting optical medium interface with different refractive indexes. However, a periodic structure is formed on condition that its period is longer than the wavelength of incident light, and no proposal is made about an antireflection element having a fine periodic structure with a period smaller than the wavelength of incident light.

In order to solve the above problems, an element according to the present invention has a periodic structure with a period smaller than the wavelength of incident light (the shortest wavelength of light to be used) formed on the surface of a base member, and also has a layer which has a refractive index lower than that of the periodic structure formed on the surface of the base member and is added on the periodic structure.

With this structure, the additional layer is made to function as a protection layer (or protection film) for the periodic structure on the base member, thus protecting the periodic structure on the base member against environmental changes such as temperature and humidity changes and physical damages. In addition, an element having an excellent antireflection function can be realized by the combination of the antireflection effect obtained by the fine periodic structure formed on the base member and the antireflection effect obtained because the refractive index of the additional layer is lower than that of the base member.

In the present invention, the additional layer may have a periodic structure with a period smaller than the wavelength of incident light.

With this structure, an antireflection effect can be obtained by the periodic structure of the additional layer itself, in addition to the above two antireflection effects, thereby realizing an element having a better antireflection function. Embodiments of the invention will now be described with reference to the accompanying drawings, in which:

Fig. 1 is a schematic view showing an antireflection element according to the first embodiment of the present invention;
Fig. 2 is a sectional view of the antireflection element according to the first embodiment;
Fig. 3 is a graph showing the reflectance characteristics of the antireflection element according to the first embodiment;
Fig. 4 is a sectional view of an antireflection element according to the second embodiment of the present invention;

Fig. 5 is a graph showing the reflectance characteristics of the antireflection element according to the second embodiment;
Fig. 6 is a graph showing the incidence angle characteristics of the antireflection element according to the second embodiment;
Fig. 7 is a schematic view showing an optical element having an antireflection function according to the third embodiment of the present invention;
Fig. 8 is a view showing the arrangement of a scanning optical system according to the fourth embodiment of the present invention;
Fig. 9 is a schematic view showing a single layer antireflection film;
Fig. 10 is a graph showing the reflectance characteristics of the single layer antireflection film;
Fig. 11 is a sectional view of an antireflection element having a fine periodic structure with a rectangular section;
Fig. 12 is a graph showing the reflectance characteristics of the antireflection element having the fine periodic structure with a rectangular section;
Fig. 13 is a sectional view of an antireflection element having a fine periodic structure with a triangle section; and
Fig. 14 is a graph showing the reflectance characteristics of the antireflection element having the fine periodic structure with a triangle section.

The arrangement and reflectance characteristics of a generally used antireflection film will be described first. The generally used antireflection film is obtained by adding a film made of a material having a refractive index lower than that of a substrate and an appropriate thickness on the substrate.

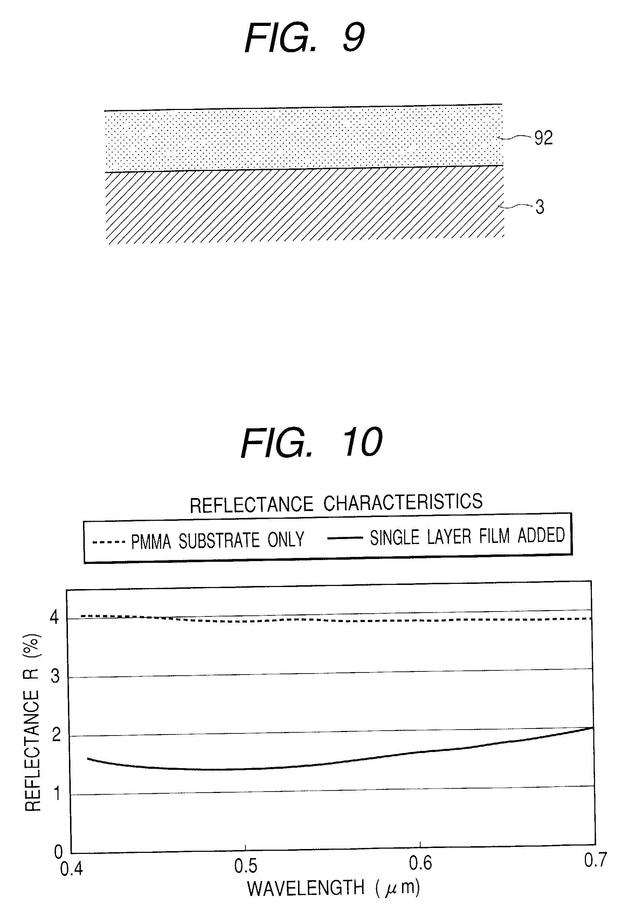

Fig. 9 is a schematic view of a general single layer antireflection film. Fig. 9 shows a substrate 3 and single layer antireflection film 92. In order to make this single layer antireflection film have an antireflection function, an optical film thickness nd may be set to satisfy equation (2) with respect to a design wavelength $\lambda$.

Assume that the design wavelength $\lambda$ is set to 0.5 $\mu$m and $MgF_2$ (n = 1.38) is used as a low-refractive-index material. Clearly in this case, the optical film thickness nd is 125 nm.

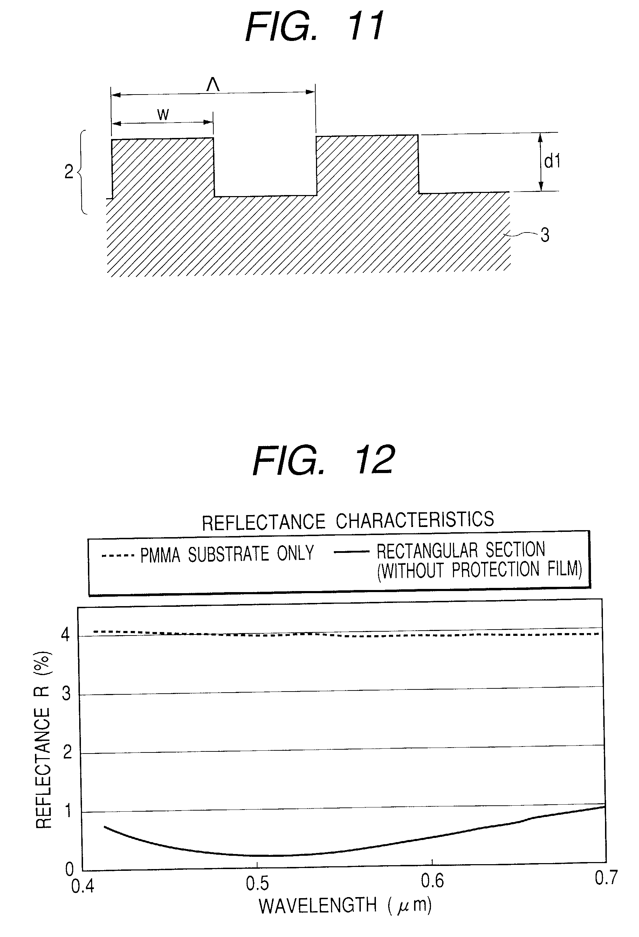

Fig. 10 shows the reflectance obtained when an $MgF_2$ single layer film having an optical film thickness of 125 nm is added on a PMMA (polymethylmethacrylate) (n = 1.492). Referring to Fig. 10, the abscissa represents the wavelength; and the ordinate, the reflectance. In Fig. 10, the solid line represents the reflectance characteristics with the single layer film, and the dashed line represents the reflectance characteristics of only the PMMA substrate without the reflection film.

As is apparent from Fig. 10, the reflectance near a wavelength of 0.5 $\mu$m becomes minimum, exhibiting the design performance.

The arrangement and reflectance characteristics of an antireflection element obtained by forming a fine periodic structure with a period smaller than the wavelength of incident light on a substrate will be described next.

Note that in this embodiment, "smaller than the wavelength of incident light" means that the period of the periodic structure is smaller than the wavelength of incident light against which an antireflection effect is to be obtained. If, for example, an antireflection effect is to be obtained against visible light (wavelength: 400 nm to 700 nm), the period of the periodic structure is smaller than the minimum wavelength, 400 nm.

Fig. 11 is a schematic view showing an optical element having a fine periodic structure 2 with a rectangular section on the substrate 3. This fine periodic structure 2 has a periodic structure only in a one-dimensional direction (horizontal direction on the drawing surface) and a rectangular cross-sectional shape. This fine periodic structure 2 can be formed by a technique like electron beam direct writing or reactive ion etching (RIE).

As a substrate material, PMMA (n = 1.492) was used, and a lattice period $\Lambda$, lattice depth d1, and filling factor w/$\Lambda$ representing the ratio of substrate material in a lattice portion were respectively set to 0.2 $\mu$m, 0.1 $\mu$m, and 0.5.

When the lattice period $\Lambda$ is almost equal to the wavelength of incident light, strong polarization characteristics, strong wavelength dependency, and occurrence of high-order diffracted light are observed, which are characteristic in a resonance region. This makes it difficult to attain desired antireflection performance. In addition, if this structure is applied to an actual optical system, high-order diffracted light may cause stray light.

In order to prevent such high-order diffracted light, the lattice period $\Lambda$ is preferably made to have a fine periodic structure with a size about 1/2 to 1/10 the wavelength of incident light. More specifically, if visible light is used, the fine periodic structure preferably has a size about 1/2 to 1/10 the shortest wavelength, 400 nm (0.4 $\mu$m), i.e., about 0.2 $\mu$m to 0.04 $\mu$m.

Fig. 12 shows the reflectance of an optical element having such a fine periodic structure. The reflectance was calculated by rigorous coupled-wave analysis as a vector diffraction theory. Referring to Fig. 12, the solid line represents the reflectance characteristics with the fine period structure, and the dashed line represents the reflectance characteristics of only the PMMA substrate without the fine period structure. Obviously, the reflectance decreases with the fine periodic structure as compared with the reflectance without the fine periodic structure. As described above, the reflectance of a substrate can be decreased by forming a periodic structure with a period smaller than the wavelength of incident light on the surface of the substrate.

(First Embodiment)

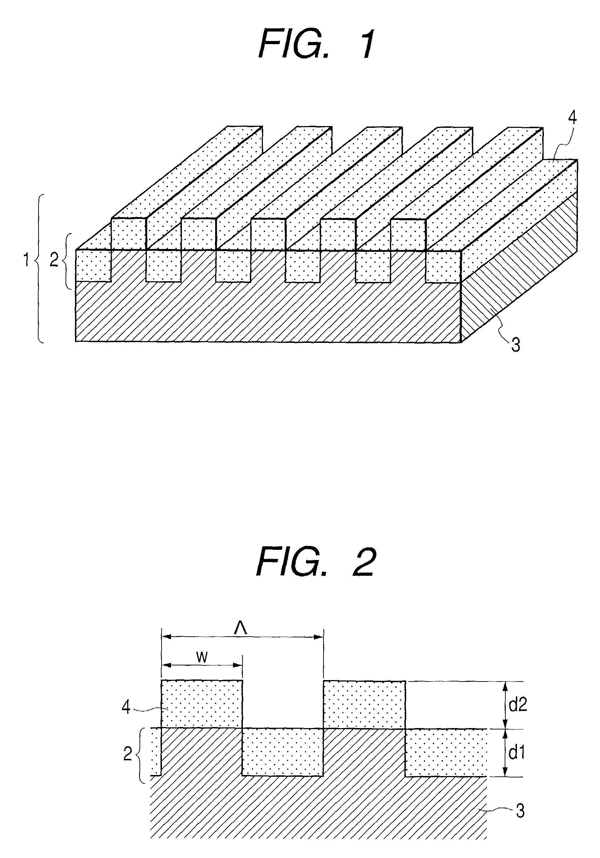

An antireflection element according to the first embodiment of the present invention will be described next with reference to Figs. 1 and 2. Fig. 1 is a perspective view showing the schematic arrangement of the antireflection element in this embodiment. Fig. 2 is a sectional view of this element.

In this embodiment, PMMA (n = 1.492) is used as a material for a substrate (base member) 3, and MgF$_2$ (n = 1.38) is used as a material for a protection layer (additional layer) 4. In addition, a lattice period (pitch) $\Lambda$ is set to 0.2 $\mu$m; a lattice depth d1, 0.085 $\mu$m, a protection layer thickness d2, 0.085 $\mu$m; and filling factor w/$\Lambda$, 0.5.

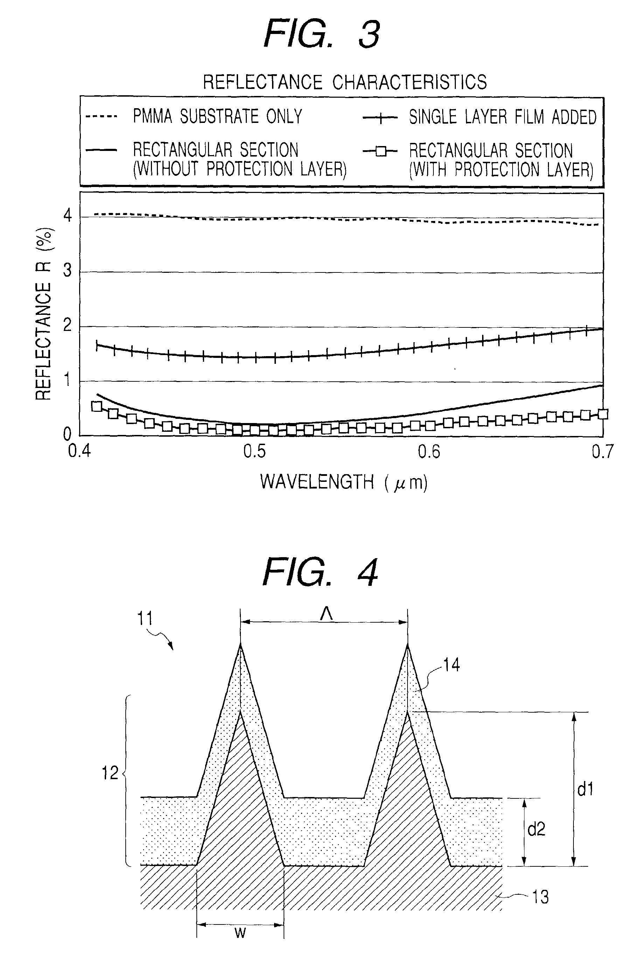

Note that the thickness d2 of the protection layer 4 is preferably equal to or smaller than the lattice depth d1 from the viewpoint of ensuring the rigidity of the protection layer 4. Rigorous coupled-wave analysis as a vector diffraction theory was used to design the lattice depth and protection layer thickness. Fig. 3 shows the reflectance characteristics in this case. Referring to Fig. 3, the abscissa represents the wavelength; and the ordinate, the reflectance.

As shown in Fig. 3, in the case of the PMMA substrate only (without the fine periodic structure) indicated by the dashed line, a reflectance of about 4% appears in the visible region due to Fresnel reflection.

If a single layer antireflection film (film material: MgF$_2$ (n = 1.38), optical film thickness: 125 nm) is formed on the PMMA substrate, the minimum reflectance can be suppressed to about 1.4% (a reflectance of about 2% or less in the visible region).

If only a rectangular fine periodic structure is formed on the PMMA substrate, the minimum reflectance can be suppressed to about 0.2% (a reflectance of 1% or less in the visible region).

In the case of an antireflection element 1 having the protection layer 4 added on a fine periodic structure 2 with a rectangular section on the PMMA substrate 3, the minimum reflectance can be suppressed to about 0.06% (a reflectance of about 0.5 % in the visible region).

In the antireflection element 1 having the protection layer 4 formed on the fine periodic structure 2, an excellent antireflection function can be attained, which is difficult to realize by a conventional antireflection scheme based on only a single layer film and only a fine periodic structure, by optimizing the shape of the fine periodic structure 2 (lattice period, lattice depth, filling factor, and the like) and the shape of the protection layer 4 (protection layer thickness, projection layer material, and the like). This makes it possible to provide an antireflection element with a reflectance lower than that of the conventional element.

In this embodiment, a material having a refractive index lower than that of the substrate 3 is used for the protection layer 4. According to Fresnel reflection, the reflectance increases at an interface where the reflectance change between the materials is large. For this reason, materials are preferably selected, which minimize the reflectance change between the material on the incident side (e.g., air) and the material of the protection layer 4 and between the material of the protection layer 4 and the material of the substrate 3.

Referring to Fig. 2, the apparent refractive index (to be referred to as "effective refractive index" hereinafter) of a portion of the protection layer 4 having the layer thickness d2 (a portion having a periodic structure between the PMMA substrate 3 and the air layer) can be calculated by using an effective refractive index method like that disclosed in M. Born and E. Wolf, Principles of Optics.

It is preferable that the effective refractive index of the portion of the protection layer 4 be substantially equal to the average value of the refractive index of the incident-side material and the refractive index of the substrate-side material (the refractive index of air and the refractive index of the PMMA substrate having the fine periodic structure 2).

In this embodiment, an effective refractive index $n_{eff}$ (representing the average value of effective refractive indexes with respect to TE and TM polarized light beams) of the portion of the protection layer 4 is 1.223, which is almost equal to an average refractive index $n_{ave}$ (= 1.246) of air and PMMA.

As described above, by using a protection film material having an appropriate refractive index, an improvement in antireflection performance can be achieved as well as the protection of the substrate material.

In the conventional single layer antireflection film, a combination of materials having ideal refractive indexes that can satisfy equation (1) cannot be realized, it is difficult to form a single layer antireflection film with a low reflectance.

In contrast to this, according to this embodiment, the effective refractive index is controlled by the protection layer 4 having the fine period lattice shape to realize a low reflectance (the minimum reflectance in the visible light region is 0.5% or less).

Note that even if an error (e.g., edge rounding or side surface tilt) occurs in the shape of the protection layer 4 in actually manufacturing an element, antireflection performance similar to that described above can be realized by optimizing the filling factor and thickness of the protection layer 4.

As described above, according to this embodiment, by adding the protection layer 4 onto the fine periodic structure 2 of the substrate 3, the fine periodic structure 2 of the substrate 3 can be protected against external environmental changes and the like. In addition, a very low reflectance can be attained owing to the antireflection effect obtained by setting the refractive indexes of the incident-side material, protection layer 4, and substrate 3 in the above relationship and the antireflection effect obtained by the fine periodic structure of the protection layer 4 in addition to the antireflection effect obtained by the fine periodic structure 2 of the substrate 3.

According to this embodiment, therefore, an antireflection element having both durability and excellent antireflection function can be realized.

(Second Embodiment)

Fig. 4 shows the arrangement of an antireflection element according to the second embodiment of the present invention. In an antireflection element 11, a fine periodic structure 12 on a substrate 13 has a triangle section, and a protection film (additional layer) 14 is formed along this triangle section.

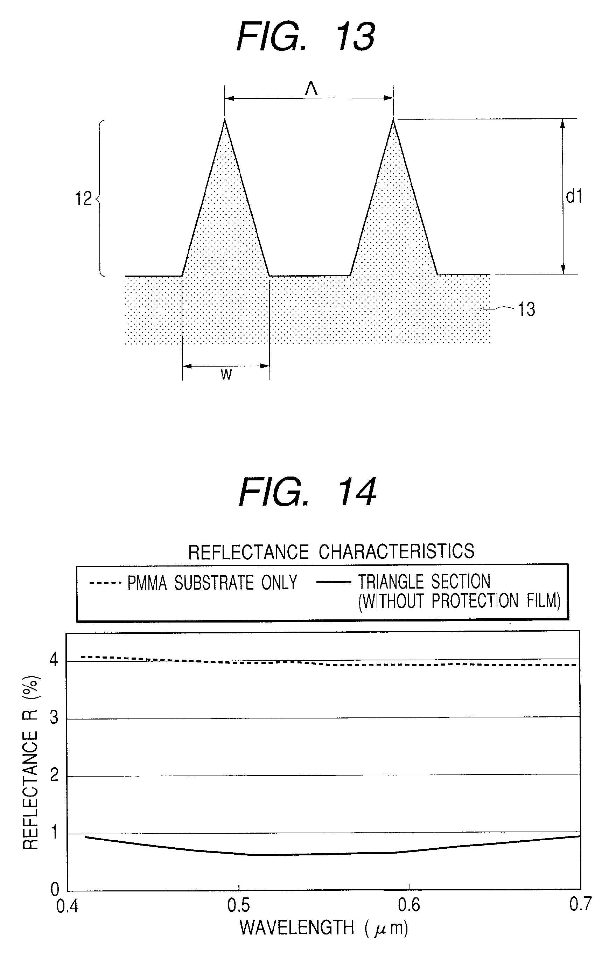

The fine periodic structure has a periodic structure only in the one-dimensional direction (lateral direction on the drawing surface). Fig. 13 shows the grating shape of the substrate 13.

As a material for the substrate 13, PMMA was used, and a lattice period $\Lambda$, lattice width, and grating depth were respectively set to 0.2 $\mu$m, 0.1 $\mu$m, and 0.19 $\mu$m.

A depth d2 of the protection layer 14 is preferably set to equal to or less than the grating depth d1 from the viewpoint of ensuring the rigidity of the protection layer 14.

Fig. 14 shows a comparison between the PMMA substrate itself and the element having the fine periodic structure 12 with a triangle section, formed on the surface of the substrate 13. Referring to Fig. 14, the abscissa represents the wavelength; and the ordinate, the reflectance. The reflectance was calculated by using rigorous coupled-wave analysis.

As is obvious from Fig. 14, by forming the fine periodic structure 12 on the surface of the substrate 13, the reflectance is reduced.

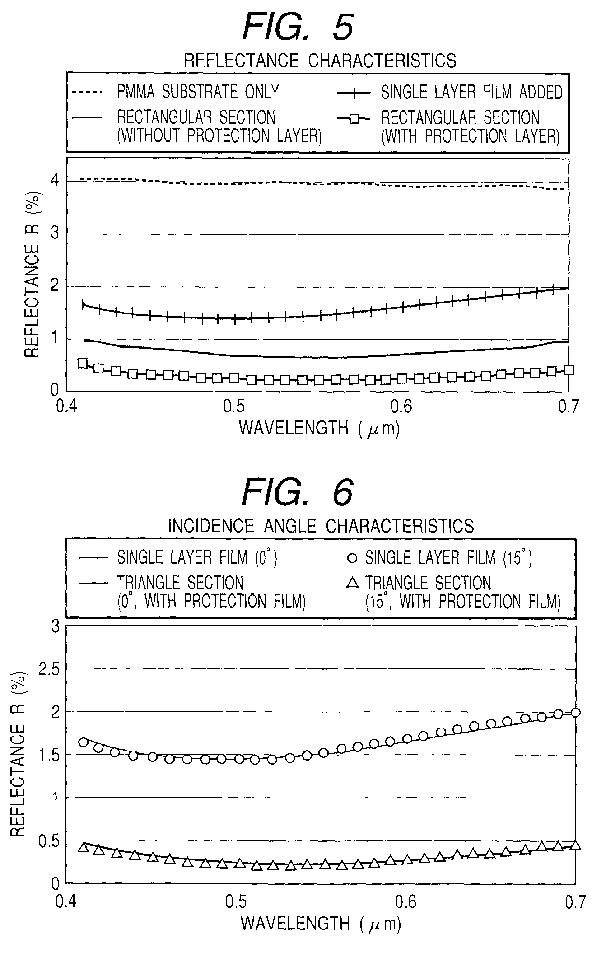

Fig. 5 shows another comparison between the reflectance of the antireflection element having the protection layer 14 added to the substrate 13 so as to obtain a triangle section and others.

In this case, PMMA was used as a material for the substrate 13, and the grating period $\Lambda$, the grating width w, and grating depth d1 were respectively set to 0.2 $\mu$m, 0.1 $\mu$m, and 0.19 $\mu$m. In addition, $MgF_2$ (n= 1.38) was used as a material for the protection layer 14, and the protection film thickness d2 was set to 0.1 $\mu$m.

As is obvious from a comparison between a PMMA substrate alone (without antireflection film), an element having a single layer antireflection film (film material: $MgF_2$ (n = 1.38, optical film thickness: 125 nm) formed on a PMMA substrate, and an element having a fine periodic structure with a triangle section formed on a PMMA substrate, the element having the protection layer 14 formed on the fine periodic structure 12 with the triangle section exhibits the best reflectance characteristics (lowest reflectance) and an improvement in the reflectance of the substrate in the entire wavelength range.

Antireflection performance (low reflectance), which was difficult to realize by the only antireflection effects obtained by the single layer film alone and the fine periodic structure alone as in the conventional art, can be realized by optimizing the grating shape (grating period, grating depth, grating portion, and the like) of the fine periodic structure 12 on the substrate 13 and the shape (protection film thickness, protection film material, and the like) of the protection layer 14.

It is preferable that the refractive index of the material of the protection layer 14 (not the effective refractive index but the refractive index of the material itself) be substantially equal to the average of the refractive indexes of the incident-side material (e.g., air) and the material of the substrate 13. This makes the refractive index of the protection film material become intermediate between the refractive index of the incident-side material and the refractive index of the substrate material. As a consequence, a refractive index change is reduced, and the reflectance can be decreased.

In addition, the effective refractive index can be continuously changed from the incident side to the substrate side by forming the protection layer 14 on the fine periodic structure 12 with triangle section. As in the case of a sloping film in the conventional art, effects such as an increase in antireflection band can be expected.

As described above, according to this embodiment, the fine periodic structure 12 on the substrate 13 can be protected against external environmental changes by adding the protection layer 14 on the fine periodic structure 12 on the substrate 13. In addition, a very low reflectance can be attained owing to the antireflection effect obtained by setting the refractive indexes of the incident-side material, protection layer 4, and substrate 3 in the above relationship and the antireflection effect obtained by the fine periodic structure of the protection layer 4 in addition to the antireflection effect obtained by the fine periodic structure 12 of the substrate 13. Furthermore, the reflectance can be further decreased by optimally designing the thickness of the protection layer 14.

According to this embodiment, therefore, an antireflection element having both durability and excellent antireflection function can be realized.

Fig. 6 shows the incidence angle dependency of reflectance. Referring to Fig. 6, the abscissa represents the wavelength; and the ordinate, the reflectance. Fig. 6 shows the reflectance of a conventional single layer film and the reflectance of the antireflection element having the fine periodic structure 12 with the triangle section shape having the protection layer 14. Note that the incidence angle was set to 0° and 15°.

As is obvious from Fig. 6, the incidence angle dependency of the antireflection element according to this embodiment stands comparison with that of the conventional single layer antireflection film. In addition, an antireflection element with reduced incidence angle dependency of reflectance can be manufactured by optimizing the lattice shape and grating depth.

In the first and second embodiments described above, when a fine periodic structure is to be formed on a substrate, the substrate need not have a flat surface, and may have a curved surface like a lens or mirror or an uneven surface like a Fresnel lens.

The fine periodic structure in each embodiment described above has periodicity only in a one-dimensional direction. However, the present invention is not limited to this. For example, this element may have a two-dimensional fine periodic structure like a grating structure whose grating shape is square or rectangular on an x-y plane. In addition, a protection film may be formed on an antireflection element having a fine periodic structure whose grating period changes in three or more directions like a grating structure whose grating shape is hexagonal on an x-y plane.

Each of the first and second embodiments has exemplified the rectangular or triangle section of the fine periodic structure having an antireflection function. However, the present invention is not limited to this shape. For example, the sectional shape of a fine periodic structure may have any shape, e.g., a stepped shape, sawtooth shape, trapezoidal shape, sinusoidal shape, or semicircular shape, as long as a protection film is added onto the surface of an antireflection element having the fine periodic structure.

(Third Embodiment)

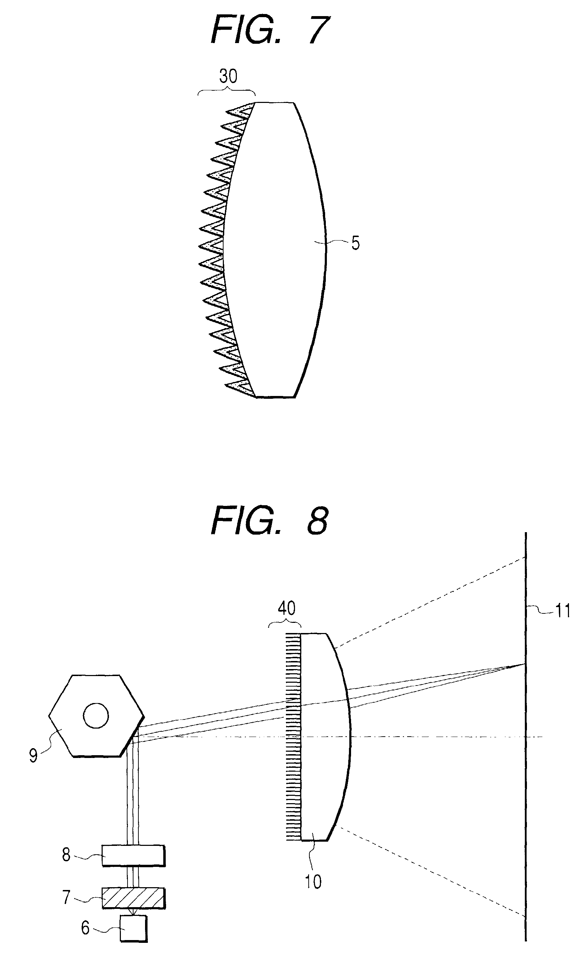

Fig. 7 shows an optical lens (optical element) according to the third embodiment of the present invention. In this embodiment, a fine periodic structure is integrally formed on the surface of an optical lens (base member) 5, and a protection film like the one described in the second embodiment is added onto this fine periodic structure, thereby forming an optical lens having the fine periodic structure with the protection film.

This makes it possible to realize a high-performance optical lens which protects the fine periodic structure on the lens surface and has attained a decrease in reflectance.

Referring to this schematic view, since a fine periodic structure 30 with a protection film is emphatically expressed, the size and shape shown differ from those of the actual antireflection element portion. In addition, although the fine periodic structure is formed on only one surface of the optical lens 5, such structures may be formed on both the surfaces of the structure.

In an optical system (not shown) using the optical lens 5 with little Fresnel reflection on the surface, reductions in ghost and flare due to light reflected by the surface of the optical lens 5 can be expected. This technique is therefore especially useful for an optical system using many optical elements, which is used in an optical apparatus such as a camera, video camera, or liquid crystal projector.

Note that the optical element of the present invention is not limited to the one according to this embodiment, but can be variously applied within the range in which the basic function and performance are not impaired. For example, a fine periodic structure substrate with a protection film (or protection layer) formed as a discrete member may be integrally boded on the surface of an optical lens or an antireflection element portion with a protection film may be formed on a prism-like optical element.

(Fourth Embodiment)

Fig. 8 shows the arrangement of an optical system according to the fourth embodiment of the present invention. This optical system is a scanning optical system used for a laser beam printer or the like.

Referring to Fig. 8, this system includes a light source 6 such as a semiconductor laser, a collimator lens 7, a cylindrical lens 8, a polygon mirror 9, and an f-θ lens 10.

A fine periodic structure 40 with a protection film (protection layer) described in the first and second embodiments is formed on the surface of the f-θ lens (base member) 10. This system also includes a photosensitive member 11.

The fine periodic structure 40 with the protection film is integrally formed on the f-θ lens 10 by forming a fine periodic structure on the surface of the f-θ lens 10 and adding a protection film (or protection layer) on the fine periodic structure.

With this structure, an improvement in the durability of the fine periodic structure on the surface of the f-θ lens 10 and a reduction in Fresnel reflection can be expected.

Recently, demands have arisen for an increase in the resolution of a laser beam printer, in particular. By reducing Fresnel reflection on the surface of the f-θ lens 10, ghost appearing on the photosensitive member 11 can be reduced, and an image output higher in resolution than that in the conventional art can be obtained.

In this embodiment, the fine periodic structure with the protection film is formed on only one surface of the f-θ lens 10. However, such fine periodic structures may be formed on both the surfaces of the f-θ lens 10, as needed.

As has been described above, a periodic structure with a period smaller than the wavelength of incident light is formed on the surface of a base member, and an additional layer having a refractive index lower than that of the base member is formed on the periodic structure. With this structure, the additional layer is made to function as a protection layer (or protection film) for the periodic structure on the base member to protect the periodic structure on the base member against environmental changes such as temperature and humidity changes. Furthermore, an element having an excellent antireflection function can be realized by the combination of the antireflection effect obtained by the fine periodic structure formed on the base member and the antireflection effect obtained because the refractive index of the additional layer is lower than that of the base member.

In addition, if a periodic structure with a period smaller than the wavelength of incident light is formed as the above additional layer, an element having a better antireflection function can be realized owing to the antireflection effect obtained by the periodic structure of the additional layer itself in addition to the above two antireflection effects.

**Claims**

1. An element having a periodic structure with a period smaller than a wavelength of incident light formed on a surface of a base member, **characterized by** comprising
   a layer added onto said periodic structure, said layer having a refractive index lower than that of a material for said periodic structure formed on the surface of the base member.

2. An element according to claim 1, **characterized in that** said periodic structure formed on the surface of the base member decreases reflectance on the base member.

3. An element according to claim 1 or 2, **characterized in that** said layer has a periodic structure with a period smaller than the wavelength of incident light.

4. An element according to claim 3, **characterized in that** the period of the periodic structure of said layer is equal to the period of said periodic structure formed on the surface of the base member.

5. An element according to any one of claims 1 to 4, **characterized in that** the period of said periodic structure formed on the surface of the base member is not more than 1/2 the wavelength of incident light.

6. An element according to any one of claims 1 to 5, **characterized in that** said layer has a thickness not more than a depth of said periodic structure formed on the surface of the base member.

7. An element according to any one of claims 1 to 6, **characterized in that** an effective refractive index calculated by using said layer and an incident-side material contacting said layer is higher than a refractive index of the incident-side material and lower than a refractive index of a material for said periodic structure formed on the surface of the base member.

**8.** An element according to any one of claims 1 to 6, **characterized in that** an effective refractive index calculated by using said layer and an incident-side material contacting said layer is substantially equal to an average value of a refractive index of the incident-side material and a refractive index of a material for said periodic structure formed on the surface of the base member.

**9.** An element according to any one of claims 1 to 8, **characterized in that** said layer protects said periodic structure formed on the surface of the base member.

**10.** An optical member **characterized by** comprising:

a base member;
a periodic structure having a period smaller than a wavelength of incident light and formed on a surface of said base member; and
a layer added onto said periodic structure, said layer having a refractive index lower than that of a material for said periodic structure formed on the surface of the base member.

**11.** An optical system **characterized by** comprising:

an optical member including
a base member,
a periodic structure having a period smaller than a wavelength of incident light and formed on a surface of said base member, and
a layer added onto said periodic structure, said layer having a refractive index lower than that of a material for said periodic structure formed on the surface of the base member.

**12.** An optical device **characterized by** comprising said optical system defined in claim 11.

**13.** A method of manufacturing an optical element having a surface which is antireflective to incident light, comprising the steps of:

forming a periodic structure on the said surface wherein the period of the structure is less than the wavelength of the incident light; and
forming on said periodic structure a layer having a refractive index less than that of the material of the periodic structure.

**14.** An optical element having a surface which is antireflective to an incident light, comprising:

a periodic structure formed on said surface and having a period which is less than the wavelength of the incident light; and
a protective layer formed on the periodic structure and having a refractive index less than that of the material of the periodic structure.

**15.** An optical element according to claim 14, wherein the periodic structure has a period of less than 400nm from 0.2μm to 0.04μm.

**16.** An optical element according to claim 15 wherein the period is from 0.2μm ti 0.04μm.

**17.** A method of reducing the reflectivity of a surface of an optical element to an incident light, comprising the steps of:

forming a periodic structure on the said surface wherein the period of the structure is less than the wavelength of the incident light; and
forming on said periodic structure a layer having a refractive index less than that of the material of the periodic structure.

## FIG. 1

## FIG. 2

# FIG. 3

REFLECTANCE CHARACTERISTICS

- - - - PMMA SUBSTRATE ONLY          —+— SINGLE LAYER FILM ADDED

——— RECTANGULAR SECTION          —□— RECTANGULAR SECTION
(WITHOUT PROTECTION LAYER)          (WITH PROTECTION LAYER)

# FIG. 4

# FIG. 5

### REFLECTANCE CHARACTERISTICS

| | |
|---|---|
| ----- PMMA SUBSTRATE ONLY | —+— SINGLE LAYER FILM ADDED |
| —— RECTANGULAR SECTION (WITHOUT PROTECTION LAYER) | —□— RECTANGULAR SECTION (WITH PROTECTION LAYER) |

# FIG. 6

### INCIDENCE ANGLE CHARACTERISTICS

| | |
|---|---|
| —— SINGLE LAYER FILM (0°) | ○ SINGLE LAYER FILM (15°) |
| —— TRIANGLE SECTION (0°, WITH PROTECTION FILM) | △ TRIANGLE SECTION (15°, WITH PROTECTION FILM) |

# FIG. 7

# FIG. 8

# FIG. 9

92

3

# FIG. 10

REFLECTANCE CHARACTERISTICS

----- PMMA SUBSTRATE ONLY   —— SINGLE LAYER FILM ADDED

# FIG. 11

# FIG. 12

REFLECTANCE CHARACTERISTICS

----- PMMA SUBSTRATE ONLY ——— RECTANGULAR SECTION (WITHOUT PROTECTION FILM)

## FIG. 13

## FIG. 14

REFLECTANCE CHARACTERISTICS

---- PMMA SUBSTRATE ONLY ——— TRIANGLE SECTION
(WITHOUT PROTECTION FILM)

European Patent
Office

EUROPEAN SEARCH REPORT

Application Number

EP 01 31 0438

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | GB 1 588 370 A (STANDARD TELEPHONES CABLES LTD) 23 April 1981 (1981-04-23) * page 1, line 48 - page 2, line 58; figures 1,5 * | 1-3,5, 9-17 | G02B1/11 G02B1/12 |
| X | RALCHENKO ET AL.: "Fabrication of CVD Diamond Optics with Antireflective Surface Structures", Phys.Stat.Sol.,174, 1999, p.171-176 XP001062393 * page 171, paragraph 2 * * page 174, paragraph 2 * | 1-8, 10-14,17 | |
| X | GB 1 462 618 A (SECRETARY INDUSTRY BRIT) 26 January 1977 (1977-01-26) * page 2, line 55 - line 130; figures 4,5 * * page 2, line 11 - line 34 * * page 1, line 31 - line 37 * | 1-12, 15-17 | |
| X | DE 38 31 503 A (VER GLASWERKE GMBH) 22 March 1990 (1990-03-22) * page 387, paragraph 2 - page 388, paragraph 1 * | 1-6,9-17 | TECHNICAL FIELDS SEARCHED (Int.Cl.7) G02B |
| A | WILSON S J ET AL: "THE OPTICAL PROPERTIES OF 'MOTH EYE' ANTIREFLECTION SURFACES" OPTICA ACTA, XX, XX, vol. 29, no. 7, 1982, pages 993-1009, XP000613779 ISSN: 0030-3909 * page 3, line 15 - line 35; claims 1,3; figures 2,4 * | 1-3,5, 10-14,17 | |

-/--

The present search report has been drawn up for all claims

| Place of search | Date of completion of the search | Examiner |
|---|---|---|
| MUNICH | 20 March 2002 | Besser, V |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## EUROPEAN SEARCH REPORT

**European Patent Office**

**Application Number**

EP 01 31 0438

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,A | PATENT ABSTRACTS OF JAPAN<br>vol. 1999, no. 12,<br>29 October 1999 (1999-10-29)<br>& JP 11 174216 A (CANON INC),<br>2 July 1999 (1999-07-02)<br>* abstract * | 1-4,<br>10-15,17 | |
| | | | **TECHNICAL FIELDS SEARCHED (Int.Cl.7)** |

The present search report has been drawn up for all claims

| Place of search | Date of completion of the search | Examiner |
|---|---|---|
| MUNICH | 20 March 2002 | Besser, V |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 01 31 0438

This annex lists the patent family members relating to the patent documents cited in the above-mentioned European search report.
The members are as contained in the European Patent Office EDP file on
The European Patent Office is in no way liable for these particulars which are merely given for the purpose of information.

20-03-2002

| Patent document cited in search report | | Publication date | Patent family member(s) | | Publication date |
|---|---|---|---|---|---|
| GB 1588370 | A | 23-04-1981 | US | 4322125 A | 30-03-1982 |
| GB 1462618 | A | 26-01-1977 | US | 4013465 A | 22-03-1977 |
| | | | AU | 6879874 A | 13-11-1975 |
| | | | DE | 2422298 A1 | 28-11-1974 |
| | | | FR | 2228630 A1 | 06-12-1974 |
| | | | JP | 50070040 A | 11-06-1975 |
| DE 3831503 | A | 22-03-1990 | DE | 3831503 A1 | 22-03-1990 |
| JP 11174216 | A | 02-07-1999 | NONE | | |

EPO FORM P0459

For more details about this annex : see Official Journal of the European Patent Office, No. 12/82